(19) Europäisches Patentamt
European Patent Office
Office européen des brevets

(11) Publication number: **0 586 066 A2**

(12) # EUROPEAN PATENT APPLICATION

(21) Application number: **93305600.4**

(22) Date of filing: **16.07.93**

(51) Int. Cl.[5]: **C08L 23/02,** // (C08L23/02, 33:18)

(30) Priority: **23.07.92 US 919009**

(43) Date of publication of application:
**09.03.94 Bulletin 94/10**

(84) Designated Contracting States:
**AT BE CH DE DK ES FR GB GR IE IT LI LU MC NL PT SE**

(71) Applicant: **THE STANDARD OIL COMPANY**
**200 Public Square, 7A**
**Cleveland, Ohio 44114-2375 (US)**

(72) Inventor: **Coffey, Gerald P.**
**5264 Ashwood Drive**
**Lyndhurst, Ohio 44124 (US)**
Inventor: **Perec, Elena Simona**
**28110 Belcourt Road**
**Pepper Pike, Ohio 44124 (US)**
Inventor: **Standish, Norman W.**
**32250 Burlwood Drive**
**Solon, Ohio 44139 (US)**
Inventor: **Melamud, Lucy**
**2580 Butternut Lane**
**Pepper Pike, Ohio 44124 (US)**
Inventor: **Smola, Jeff**
**4681 Alber Road**
**Richfield, Ohio 44286 (US)**

(74) Representative: **Hymers, Ronald Robson et al**
**BP International Limited, Patents & Agreements Division, Chertsey Road**
**Sunbury-on-Thames, Middlesex, TW16 7LN (GB)**

(54) **Polyolefins with improved barrier properties.**

(57) Polymer blends having improved barrier properties comprising 85 to 99.5 weight percent polyolefin and 0.5 to 15 weight percent high nitrile polymer are disclosed. In addition, containers comprising 80 to 99.5 weight percent polyolefin and 0.5 to 20 weight percent high nitrile polymer are produced having improved barrier properties.

**EP 0 586 066 A2**

Jouve, 18, rue Saint-Denis, 75001 PARIS

## TECHNICAL FIELD

This invention relates to blends of high nitrile polymers, such as acrylonitrile-methyl acrylate copolymer with various polyolefins which permit the incorporation of the desirable characteristics of each component polymer or copolymer into a single material. Accordingly, improvements in barrier properties to solvents and gases, chemical resistance, strength and processability can be imparted to polyolefins. The nitrile polymers impart significant barrier enhancements for many polyolefins that are otherwise recognized as permeable materials. Rigid containers including large objects such as drums and tanks, films and molded parts of these blends, which display the ability to restrict the passage of gasses, vapors and organic liquids, find utility in packaging applications, membrane materials, automotive gasoline tanks and storage vessels. Moreover, the blends afford the opportunity of employing low cost materials with more costly polymers having a desired property. A method for the formation of blends comprising high nitrile polymers with polyolefins is also provided.

## BACKGROUND OF THE INVENTION

Since the main reason for polymer blending is to create products with desirable properties in an economical fashion, the relatively low cost and availability of polyolefins make them very attractive in creating new materials. Polyolefins are recognized for their many and varied properties such as relative inertness to water based products and many organic products, structural strength and flexibility even at low temperatures. Additionally, polyolefins display a high ability to restrict the passage of water vapor and therefore they are utilized in the packaging industry. Chemical resistance of polyolefins to organic solvents has led to applications such as gasoline tanks. Polyolefins are also not suitable to applications requiring stringent gas barrier protection. On the other hand, other polymers such as high nitrile polymers and copolymers, those with an acrylonitrile content above 50 percent, are excellent organic vapor and gas barriers, have excellent chemical resistance and have modest water vapor-barrier properties.

Accordingly, it would be highly advantageous if the most desirable characteristics of each of these types of polymers could be incorporated into a single material. A practical way of combining high nitrile polymers and polyolefins is not easily accessible because they are regarded as incompatible materials in that they have dissimilar polarities. High nitrile polymers are very chemically inert. Since they are polar in nature whereas polyolefins are non-polar, they would not be expected to blend to produce a homogeneous composition, and would upon blending form highly phase separated systems exhibiting low interfacial adhesion between the phases and consequently poor transfer of mechanical stress.

Many patents are knawn to provide polymer blend compositions wherein one component is a graft copolymer which can contain an olefin or diene rubber. Although olefins and acrylonitrile are present in these compositions, they are generally not blended together as separate polymers.

For instance, U.S. Patent No. 3,634,547, is directed toward graft copolymers which comprise a diene rubber copolymer substrate and a superstrate comprising acrylonitrile, a vinyl ether and optionally, an N-aryl maleimide. These graft copolymers can be blended with a resin containing acrylonitrile and ethylenically unsaturated comonomer including alkenes and optionally, an N-aryl maleimide. The blend compositions have high tensile strength and improved impact resistance.

U.S. Patent No. 3,652,726 similar to the '547 patent discloses blends of graft copolymers and copolymer resins. The graft copolymer contains at least one percent of N-aryl maleimide and it also contains an aromatic olefin such as styrene. The copolymer resins include acrylonitrile/aromatic olefin resins; blends of the graft copolymer and various compatible resins such as ABS; and blends of acrylonitrile, N-aryl maleimide and an aromatic olefin with an ABS graft copolymer. These compositions exhibit comparable properties as appear in the preceding patent, and they possess high softening points.

U.S. Patent No. 3,962,371 provides thermoplastic molding compounds comprising mixtures of first, a copolymer of acrylonitrile, at least one aromatic vinyl compound and optionally, a monoolefin, and second, a graft copolymer of an ethylene/vinyl ester copolymer as a substrate and grafted units comprising acrylonitrile, a vinyl aromatic compound and optionally, a monoolefin.

U.S. Patent No. 4,397,987 is directed toward oil resistant and ozone resistant polymer blends comprising blends of acrylonitrile/butadiene rubber with an EPDM rubber containing graft branches of poly(methyl methacrylate).

U.S. Patent No. 4,409,365 is directed toward thermoplastic rubber blends comprising first, a blend of a crystalline polyolefin resin with vulcanized EPDM rubber and second, a blend of crystalline polyolefin resin with a vulcanized nitrile rubber. The latter nitrile rubbers comprise copolymers of 1,3-butadiene or isoprene and acrylonitrile which are preferably "functionalized" with one or more graft forming functional groups. Such groups include carboxy groups and amino groups. The patent also discloses the use of maleic acid modified

polypropylene in the blend with the functionalized nitrile rubber.

U.S. Patent No. 4,588,774 discloses another thermoplastic composition comprising a terpolymer of methyl methacrylate, N-aryl substituted maleimide and a vinyl aromatic monomer, with an acrylonitrile copolymer grafted onto polybutadiene rubber.

U.S. Patent No. 4,605,700 is directed to a similar composition as set forth in the preceding patent which employs a copolymer comprising an olefin and an N-aryl substituted maleimide in lieu of the terpolymer.

While these patents disclose blends of mixtures of polymers, one of which is an acrylonitrile polymer, the blends do not necessarily disclose high acrylonitrile containing copolymers. Such polymers are described in detail in U.S. Patent Nos. 3,426,102, 3,586,737 and 3,763,278 owned by the Assignee of record herein. They are basically thermoplastic polymer compositions containing at least 70 percent by weight of an unsaturated mononitrile, an ester of an olefinically unsaturated carboxylic acid and a rubbery copolymer of a conjugated diene and styrene or an olefinically unsaturated nitrile.

Blends of other thermoplastic polymers with these polymers are described in seven U.S. patents also owned by the Assignee of record herein. U.S. Patent No. 3,914,337, for instance, disclosed blends of high acrylonitrile copolymers with resinous copolymers of acrylonitrile and styrene. U.S. Patent Nos. 4,153,648 and 4,195,135 disclose blends of high acrylonitrile copolymers with acrylonitrile indene copolymers. U.S. Patent No. 4,160,001 discloses blends of high acrylonitrile copolymers with a copolymer of methyl methacrylate and styrene. U.S. Patent No. 4,307,207 discloses blends of high acrylonitrile copolymers with hydrophobic nylon. U.S. Patent No. 5,004,783 is directed to blends of high nitrile copolymers and thermoplastic polymers containing polar groups. U.S. Patent No. 4,914,138 is directed to blends of high nitrile polymer and functionalized polyolefins. U.S. Patent 5,084,352 is directed to multilayered barrier structures wherein one layer is a heterogeneous polymer high nitrile content blend which may comprise a high nitrile copolymer and a polyolefin. Finally, U.S. Patent 4,123,576 discloses multilayered barrier structures wherein one layer is a polymer blend comprising at least 20 weight percent nitrile copolymer and at least 80 weight percent polyolefin.

The blends with nylon exhibit improved impact resistance and are useful in a variety of thermoformed articles. The other blends have improved gas barrier properties and other mechanical properties making them suitable as packaging materials. Despite the existence of many blends involving acrylonitrile polymers with other polymers, the foregoing patents do not disclose blends comprising high acrylonitrile polymers with polyolefins which do not contain functional groups, and form a visually homogeneous composition.

## SUMMARY OF THE INVENTION

It is an object of the present invention to provide compatible polymer blends having improved mechanical and chemical properties.

It is yet another object of the present invention to provide compatible polymer blends that contain low cost polymer components and which exhibit improved processability.

It is a further object of the present invention to provide compatible polymer blends which can be employed to form films, membranes and rigid containers that have limited or restricted permeability to gases, vapors and organic liquids.

It is further still an object of the present invention to provide a method for forming blends of high acrylonitrile polymers and polyolefins.

These and other objects, together with the advantages thereof over known polymer blends, which shall become apparent from the specification which follows, are accomplished by the invention as hereinafter described and claimed.

In general, a polymer blend according to the present invention comprises from about 0.5 to 15 weight percent of a high nitrile polymer preferably 1 to 12 weight percent, most preferable being 3 to 10 weight percent, produced by polymerizing a major proportion of a monounsaturated nitrile, a minor proportion of another monovinyl monomer copolymerizable therewith optionally in the presence of a diene rubber, and from about 85 to 99.5 weight percent of a polyolefin, preferably 88 to 99 weight percent, most preferable being 90 to 97 weight percent. For purposes of the present invention, the term "polyolefin" is intended to mean any hydrocarbon thermoplastic polymer made from olefines such as polyethylene (LLDPE, LDPE, HDPE etc) polypropylene, polybutenes, polypentenes, copolymers thereof and any blends of the above polyolefin. It does not include polyolefins which have been modified by any functional group (for example, see U.S. Patent 4,914,138) to improve the compatibility of the polyolefin with the nitrile.

The present invention further provides for containers made from the polymer blend set forth above. Preferably, blow or injection molded containers consisting of a polymer blend of 0.5 to 20 weight percent high nitrile polymer and 80 to 99.5 weight percent polyolefin.

The present invention also provides a polymer blend comprising from about 0.5 to 30 weight percent of a

high nitrile polymer produced by polymerizing a major proportion of a monounsaturated nitrile, a minor proportion of another monovinyl monomer copolymerizable therewith optionally in the presence of a diene rubber, from about 70 to 99.5 weight percent of a polyolefin and a compatibilizing agent. Preferably the polymer blends comprise 1 to 25 weight percent high nitrile polymer and 75 to 99 weight percent polyolefin. Especially preferred polymer blends comprise 3 to 20 weight percent high nitrile polymer and 80 to 97 weight percent polyolefin.

## DETAILED DESCRIPTION OF THE INVENTION

The polymer blends of the present invention comprise a mixture of two or more polymers. One is always a high nitrile polymer by which is meant more than about 50 percent by weight of the polymer is a nitrile polymer. The other is a polyolefin which will be discussed herein.

More particularly, the nitrile polymers useful in this invention are those produced by polymerizing a major proportion of a monounsaturated nitrile, e.g., acrylonitrile, and a minor proportion of another monovinyl monomer component copolymerizable therewith optionally in the presence of a diene rubber which may be a homopolymer or copolymer of a conjugated diene monomer.

The high nitrile polymer compositions of the present invention can be prepared by any of the generally known techniques of polymerization including bulk polymerization, solution polymerization and emulsion or suspension polymerization by batch, continuous or intermittent addition of the monomers and other components. The preferred method is by emulsion or suspension polymerization in an aqueous medium in the presence of a free-radical generating polymerization initiator at a temperature of from about 0°C to 100°C in the substantial absence of molecular oxygen.

The olefinically unsaturated nitriles used in the present invention are the alpha, beta-olefinically unsaturated mononitriles having the structure:

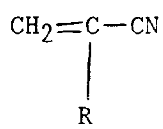

wherein R is hydrogen, a lower alkyl group having from 1 to 4 carbon atoms or a halogen. Such compounds include acrylonitrile, alpha-chloroacrylonitrile, alpha-fluoroacrylonitrile, methacrylonitrile, ethacrylonitrile and the like. The most preferred olefinically unsaturated nitriles useful in the present invention are acrylonitrile and methacrylonitrile and mixtures thereof.

The monomer component copolymerizable with the olefinically unsaturated nitrile includes one or more of the esters of olefinically unsaturated carboxylic acids, vinyl esters, vinyl ethers, vinyl ketones, alpha-olefins, vinyl aromatic monomers, and others.

The esters of olefinically unsaturated carboxylic acids include those having the structure:

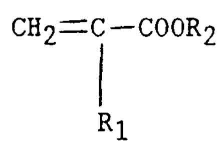

wherein $R_1$ is hydrogen, an alkyl group having from 1 to 6 carbon atoms, or a halogen, and $R_2$ is an alkyl group having from 1 to 30 carbon atoms. Compounds of this type include methyl acrylate, ethyl acrylate, the propylacrylates, the butylacrylates, and amylacrylates, the hexylacrylates, methyl methacrylate, ethyl methacrylate, the propyl methacrylates, the butyl methacrylates, the amyl methacrylates and the hexyl methacrylates, methyl alpha-chloroacrylates, ethyl alpha-chloroacrylates and the like. Most preferred in the present invention are methyl acrylate, ethyl acrylate, methyl methacrylate and ethyl methacrylate.

The alpha-olefins useful in the present invention are those having at least 4 and as many as 10 carbon atoms having the structure:

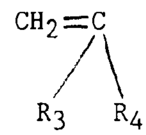

wherein $R_3$ and $R_4$ are alkyl groups having from 1 to 7 carbon atoms, and more specifically isobutylene, 2-methyl butene-1, 2-methyl pentene-1, 2-methyl hexene-1, 2-methyl heptene-1, 2-methyl octene-1, 2-ethyl butene-1, 2-propyl pentene-1, 2,4,4-trimethyl pentene-1 and the like and mixtures thereof. Most preferred is isobutylene.

The vinyl ethers include methyl vinyl ether, ethyl vinyl ether, propyl vinyl ethers, the butyl vinyl ethers, methyl isopropenyl ether, ethyl isopropenyl ether and the like. Most preferred are methyl vinyl ether, ethyl vinyl ether, the propyl vinyl ethers, and the butyl vinyl ethers.

The vinyl esters include vinyl acetate, vinyl propionate, the vinyl butyrate and the like. Most preferred is vinyl acetate. The vinyl aromatic monomers include styrene, alpha-methyl styrene, the vinyl toluenes, the vinyl xylenes, indene and the like. Most preferred is styrene.

The olefinic nitrile copolymer is optionally polymerized in the presence of a preformed diene rubber which may be a homopolymer or copolymer of a conjugated diene monomer. These monomers include 1,3-butadiene, isoprene, chloroprene, bromoprene, cyanoprene, 2,3-dimethyl 1,3-butadiene, 2-ethyl 1,3-butadiene, 2,3-diethyl 1,3-butadiene and the like. Most preferred for the purpose of this invention are 1,3-butadiene and isoprene because of their ready availability and their excellent polymerization properties.

The conjugated diene monomer may be copolymerized with a comonomer selected from the group consisting of vinyl aromatic monomer, an olefinic nitrile monomer having the structure:

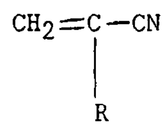

wherein R has the foregoing designation, and an ester having the structure:

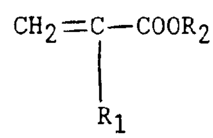

wherein $R_1$ and $R_2$ have the foregoing designations. The rubbery polymer contains from 50 percent to 100 percent by weight of polymerized conjugated diene monomer and from 0 percent to 50 percent by weight of a comonomer.

Preferred polymers useful in this invention are those prepared by the polymerization of 100 parts by weight of (A) from 50 percent to 90 percent by weight of at least one nitrile having the structure:

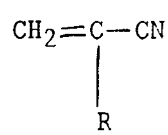

wherein R has the foregoing designation and (B) from 10 percent to 40 percent by weight based on the combined weights of (A) and (B) of at least one member selected from the group consisting of an ester having the structure:

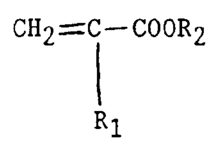

wherein $R_1$ and $R_2$ have the foregoing respective designations; and alpha-olefins having the structure:

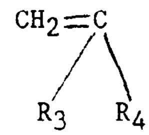

wherein $R_3$ and $R_4$ have the foregoing respective designations; a vinyl ether selected from the group consisting of methyl vinyl ether, ethyl vinyl ethers, the propyl vinyl ethers, and the butyl vinyl ethers; vinyl acetate; styrene and indene, in the presence of from 0 to 40 parts by weight of (C) a rubbery polymer of a conjugated diene monomer selected from the group consisting of butadiene and isoprene and optionally a comonomer selected from the group consisting of styrene, a nitrile monomer having the structure:

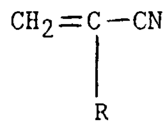

wherein R has the foregoing designation, and an ester having the structure:

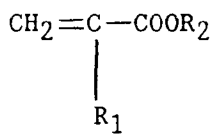

wherein $R_1$ and $R_2$ have the foregoing respective designations, said rubbery polymer containing from 50 percent to 100 percent by weight of polymerized conjugated diene and from 0 percent to 50 percent by weight of a comonomer. The most preferred nitrile polymers are prepared by the polymerization of between 70 to 80 part by weight of (A) and 20 to 30 parts by weight of (B) in the presence of from 5 to 15 parts of (C). A particularly suitable nitrile polymer that can be employed is Barex® 210 resin, a tradename for the commercial product of BP America Inc. which is a poly(acrylonitrile-methyl acrylate-butadiene) composition (70-21-9) having a number average molecular weight of 50000.

Thermoplastic high nitrile resins of at least 70 percent by weight of a monounsaturated nitrile and up to 30 percent by weight of at least one other comonomer and which may also be rubber modified have previously been described in U.S. Patent Nos. 3,426,102, 3,586,737, 3,763,278, the subject matter of which is incorporated herein by reference. These polymers have excellent barrier properties and can be molded into containers, pipes, films, sheets and the like, to be used for packaging solids, liquids and gases of various types.

As noted in U.S. Patent 4,914,138, blends of high nitrile polymers and polyolefins are generally recognized to be incompatible because of a high degree of phase separation. For components with such low affinity to each other, the melt interfacial tension is high and a fine dispersion of phases has been difficult to achieve. U.S. Patent 4,914,138 solution to the incompatibility problem was to use a polyolefin functionalization with polar moieties leading to compatabilization with high nitrile polymers. More particularly, at the molecular level, functional groups, inserted on polyolefin chains, gave rise to molecular interactions with reactive sites of high nitrile polymer chains. These interactions were believed to be responsible for the compatibility of the blends. The present invention is directed to the use of hydrocarbon polyolefins which have not been modified to improve their compatibility to the high nitrile component of the mixture. It has been found that it is possible to directly blend a polyolefin with a rubber containing nitrile polymer to produce a visually uniform composition. Addition of compatibilizing agents to this blend of polyolefin with a rubber grafted nitrile polymer extends even further the amount of nitrile polymer that can be incorporated into the blend and provides additional improvement in chemical resistance and barrier properties.

Suitable polyolefins for use in the present invention are formed from alpha-monoolefin monomers having from 2 to about 6 carbon atoms. Representative examples include poly(ethylene) or PE; poly(propylene) or PP and poly(ethylene-co-propylene) or PEP.

It is important to note that depending on the concentration of the nitrile polymer component, the rheological characteristics of both components, and processing conditions employed for these blends of polyolefins with

high nitrile resins, physical compatibility can be achieved even in the absence of compatibilizers. Under well defined processing conditions based on properties of both constituents, a visually compatitable composition with improved mechanical characteristics, barrier properties and chemical resistance can be achieved even in the absence of compatibilizers. Conventional extrusion equipment can be used to achieve maximum mixing. The fusion point of these blends is somewhat lower in comparison with the polyolefin control. It is necessary to avoid high pressure zones in the extrusion screw which will reduce the compatibility of the nitrile polymer in the polyolefin causing de-mixing. Standard mixing devices which do not create high pressure zones such as mixing rings, secondary flights, Maddox-type mixing sections and etc. are satisfactory for producing a visually uniform blend. However, a limit in concentration of high nitrile resin appears to be reached at about 10-15% when the trend in improving the mechanical properties is reversed and the use of compatibilizing agents becomes essential. Uniform materials exhibiting lower melt viscosity characteristics than the polyolefin component alone have been obtained. It was also observed during processing of these blends which contain up to 15% high nitrile copolymer (e.g. Barex® 210 resin produced by the Assignee of the instant application) that they have better melt strength which reduces the tendency for the composition in extrusion blow molding to sag and also leads to reduced shrinkage from the die.

These compositions offer products with properties that can be applied in engineering and industrial applications including extrusion blow molding, thin walled blow molding and injection molding. The fusion temperature is influenced by the presence of low levels of high nitrile polymers and these materials can be used as processing aids for polyolefins. Particular fields where such fusion characteristics are very important are in rotomolding and in injection molding. A common practice in rotomolding is to use crosslinked HDPE and LLDPE to achieve improved chemical resistance and stiffness. We have found these property improvements with the novel HDPE/high nitrile polymer blends of the present invention. The main drawback of using crosslinked grades of polyolefins are cost related. For example, HDPE rotomolded grade is $0.60/lb. whereas crosslinking grades are $1.20/lb. Other disadvantages are the precautions which have to be taken to avoid premature curing such as overheating on loading docks and in storage, storage life before properties change, etc. The low fusion characteristics and good heat stability of the HDPE/high nitrile blends of the present invention make them very desirable candidate materials to produce drums and large containers (55 gallons to 20,000 gallons). An additional advantage of applying this technique is the possibility of using HDPE grades of higher molecular weight than normally used for rotomolding which, in turn, should translate into improved properties of the rotomolded articles.

The polyolefin resin blends of the present invention can be improved by the addition of properly selected compatibilizers. It is important to note that very low levels of these compatibilizers are required. Depending on the composition optimum results can be obtained with use of levels as low as 0.1% and as high as 5% by weight, preferably being 0.1% to 4% by weight, especially preferred being 0.1 to 3% by weight.

It has been found that alternating copolymers of alpha-olefins and maleic anhydride (MA) can function very efficiently as compatibilizers for polyolefin/high nitrile polymer blends of the present invention.

A further enhancement of this invention includes the use of small amounts of dispersant/plasticizer (such as calcium or zinc stearate) to improve the mechanical properties such as bottle drop impact strength and visual surface quality of products produced with the blend.

To further illustrate the practice of the present invention, the following examples are set forth below.

Example 1

Preparation of 95/5 HPDE/Barex® 210 Blends Using a Brabender

The blend is prepared by mixing 47.5g of high density polyethylene (Dow grade 62013) and 2.5g of Barex® 210 (extrusion grade) in a torque rheometer (C.W. Brabender, model PLD-331) set at 35 rpm and the initial temperature of 200°C. The mixture is stirred for 5-10 minutes.

Example 2

Preparation of Films from 95/5 HDPE/Barex® 210 Brabender Blends

A blend is prepared as in Example 1. At the end of five minutes the 95/5 HDPE/Barex®) 210 blend is quickly removed from the Brabender (about 30 seconds to one minute required) and immediately transferred to a preheated mold in a preheated Wabash press. A plaque (3" x 6" x 1/8") is prepared by pressing the mold at 2000 psi and 200°C for two minutes followed by water cooling the press under the applied pressure for 10-12 minutes. The plaque is cut into one inch squares using a band saw. Films from the 95/5 HDPE/Barex® 210 blend

are prepared by compression molding one inch squares from the plaques between top and bottom platens cut from an EKCO Baker's Secret cookie sheet (metallic surfaces coated with nontoxic FDA approved silicone compounds). Conditions are 1000 psi (0.69 Pa) at 200°C for one minute. The thickness of these films is about seven mils (177.8 microns).

Example 3

Preparation of Compatibilized Blends of HDPE and Barex® 210 Using a Brabender

The blend is prepared as in the previous example. Pellets of HDPE Dow 62013 (48.375g) are mixed with 1.25g of Barex® 210 (extrusion grade) and 0.375g of poly(octadecyl-co-maleic anhydride). The latter is a free flowing white powder with a melting temperature at 120-131°C and is sold under the tradename PA-18 by Chevron Chemical Company. The rest of the procedure is similar to the one described in the previous example.

Example 4

Pelletized Blends HDPE and Barex® Resin Prepared With and Without Compatibilizer

A sample of HDPE/Barex® resin binary and ternary blends were pelletized prior to blow molding using a Prodex single screw extruder. The extrusion screw was 1.75 inches diameter, 2.0:1 compression ratio and the extruder has a L/D ratio of 26:1. The screw was a general purpose configuration with a feed, transition and metering zone. A Conair Microconomix volumetric blender was used to accurately maintain blending and mixing of the components before direct feeding to the extruder. All five heating zones on the extruder barrel were maintained at 390°F (198.9°C). The screw RPM was 60. The melt temperature of the extrudate was 400°F (204°C). All of the processing conditions were kept constant for all of the blends.

Typical compositions prepared in this manner are shown in Table No. 1.

TABLE 1

| PREPARATION OF HDPE/BAREX® BLENDS | | | |
|---|---|---|---|
| Run No. | Barex® 210 Resin (% by weigth) | Compatibilizer (Actone 1) % by weight-Active | Zn Stearate (% by weight) |
| 1 | 3.5 | 0 | 0 |
| 2 | 5 | 0 | 0 |
| 3 | 10 | 0 | 0 |
| 4 | 15 | 0 | 0 |
| 5 | 10 | 1 | 0 |
| 6 | 15 | 3 | 0 |
| 7 | 15 | 3 | 0.1 |

All of these compositions provided blends that were visually uniform compositions. Rheological characteristics of typical blends and the HDPE (Paxon BA 50-100) are presented in Table No. 2.

TABLE 2

| RHEOLOGICAL CHARACTERISTICS OF HDPE/BAREX® BLENDS | | | |
|---|---|---|---|
| Resin/Blends | Viscosity 1 sec.-1 (Kpoise) | Viscosity, 1000 sec.-1 (Kpoise) | Shear Sensitivity (1/1000) |
| HDPE | 281.0 | 4.80 | 58.5 |
| 95/5 HDPE/Barex®resin | 128.6 | 4.42 | 29.1 |
| 90/10 HDPE/Barex®resin | 97.5 | 3.89 | 25.1 |

Example 5

Preparation of Rigid Containers from HDPE/Barex® Resin Blends

A single cavity Bekum bottle extrusion blow molding machine (Model No. BMO4) was used for fabrication of one pint rigid containers. HDPE (Paxon BA 50-100)/Barex® resin blend was employed to make the rigid containers. The screw was operated at 15 RPM and had a 2.5:1 compression ratio and was equipped with a Maddox mixing tip. The blow pressure was 80 psi. The temperature profile was 320°F at the feed section and 390°F at the detering end. The rigid container was approximately 28.5 gms.

Typical extrusion characteristics observed are shown in Table 3.

TABLE 3

| EXTRUSION BLOW MOLDING OF HDPE/BAREX® RESIN BLENDS | | | |
|---|---|---|---|
| Composition HDPE/Barex® 210 Resin | Extrudate Melt Temperature, °F | Head Pressure psi | Throughout Rate Grams/minute |
| 100/0 | 393 | 1590 | 106 |
| 95/5 | 402 | 1250 | 112 |
| 90/10 | 387 | 1110 | 111 |
| 84/15 | 395 | 980 | 113 |

Example 6

Fabrication of Rotomolded Part Using HDPE/Barex® 210 Resin Blends

Pelletized blends of HDPE (Paxon BA 50-100)/Barex® 210 resin containing 10% Barex® 210 resin were ground in a pin mill at 140°F (60°C) to give a minus 35 mesh powder. This powder was charged to a rotomold and exposed in an oven while rotating for 15 minutes at 550°F. After cooling, the solid formed part was removed from the mold. In contrast, a similar experiment using HDPE powder alone under the same conditions resulted in a part which was not fused and only loosely bonded powder was recovered from the mold after cooling.

Product Testing

Chemical Resistance Tests-Films Obtained by Compression Molding of Brabendered or Extruded Blends of Binary and Compatibilized Ternary Blends

Test Prodecures

Thin films obtained by compression molding (as was described in a previous section) of binary or ternary (compatibilized blends) were tested for their chemical resistance properties by mounting them onto glass vapor transmission jars. Following ASTM method D-814-86, the jars were one half pint (236 $cm^3$) Mason jars equipped with a Kerr-type screw cap and an added smooth edged, flat-metal ring. The screw cap and ring held the specimen against the edge of the jar. The circular area of each specimen exposed for testing was 2.188" (55.6 mm) in diameter.

Approximately 200ml of xylene were poured into seach jar and the thickness of the specimen was measured to the nearest 0.001" by an electronic digital device. The initial weights of the jars filled with solvent and fitted with the test films were recorded to the nearest 0.005g. The tightly sealed jars were then placed at room temperature in a well ventilated oven. The jars were kept in an upright position with no direct contact between the solvent and the test specimen. The test was conducted at room temperature and the weight loss recorded every 24 hours for at least 15-30 days. Two samples of the same composition were prepared for each specimen, and permeability was taken as the average of the values obtained from the two test jars. Chemical resistance properties of films obtained by compression molding of binary (uncompatibilized) blends and ternary (compatibilized) blends prepared via Brabender or extrusion are presented in Tables 4-7.

TABLE 4

| Chemical Resistance Improvements of Polyolefin/Barex® 210 Brabender Blends | | |
|---|---|---|
| No. | Amount of Barex® 210 (wt%) | Chemical Resistance Improvement (%) |
| 1 | 2.5 | 7.9 |
| 2 | 20.0 | 21.1 |

Specimens tested are compression molded films.

TABLE 5

| Chemical Resistance Improvement of HDPE/Barex® 210 Extruded Blends | | |
|---|---|---|
| No. | Amount of Barex® 210 (wt%) | Chemical Resistance Improvement (%) |
| 1 | 1.5 | 6.9 |
| 2 | 2.5 | 26.1 |
| 3 | 5.0 | 29.0 |

Specimens tested are compression molded films

The compatibilizers used in some blends are identified as follows: BM-30 is a terpolymer of Isobutene (IB), maleic anhydride (MAH) and N-Phenylmaleimide (PMI) with a IB/MAH/PMI molar ratio = 0.5 /0.35/0.15, a molecular weight (Mw) of 30,000 and a softening range of 150-160°C and it is sold by Kuraray Co. Ltd.

PA-18 or poly (octadecyl-co-maleic anhydride) is an alternating copolymer and as was mentioned in a previous section is commercially available from Chevron Chemical Co.

PMVE-MA is poly (vinyl methyl ether-maleic anhydride) and is sold by GAF Corporation.

Table 6 demonstrates with three different compatibilizers that an increase in their amount for the same amount of nitrile polymer does not lead to higher improvement in chemical resistance properties of these blends. See examples 1 and 2, 3 and 4, 11 and 12, 13 and 14, 18 and 19, 20 and 21.

TABLE 6

Chemical Resistance Improvement of Compatibilized HDPE/Barex® 210 Brabender Blends

| No. | Amount of Barex® 210 (wt%) | Amount of Compatibilizer (wt%) | Type of Compatibilizer | Chemical Resistance Improvement (%) |
|---|---|---|---|---|
| 1 | 5 | 2.5 | BM-30 | 10.7 |
| 2 | 5 | 5.0 | BM-30 | 5.9 |
| 3 | 12.5 | 2.5 | BM-30 | 23.2 |
| 4 | 12.5 | 5.0 | BM-30 | 25.1 |
| 5 | 20.0 | 2.5 | BM-30 | 10.0 |
| 6 | 20.0 | 5.0 | BM-30 | 27.4 |
| 7 | 2.5 | 0.375 | PA-18 | 12.5 |
| 8 | 2.5 | 0.75 | PA-18 | 30.3 |
| 9 | 5.0 | 0.75 | PA-18 | 10.0 |
| 10 | 5.0 | 1.5 | PA-18 | 21.5 |
| 11 | 12.5 | 0.75 | PA-18 | 22.3 |
| 12 | 12.5 | 1.5 | PA-18 | 21.3 |
| 13 | 20.0 | 0.75 | PA-18 | 29.9 |
| 14 | 20.0 | 1.5 | PA-18 | 28.0 |
| 15 | 2.5 | 0.75 | PMVE-MA | 8.4 |
| 16 | 2.5 | 1.5 | PMVE-MA | 39.5 |
| 17 | 5.0 | 0.75 | PMVE-MA | 17.1 |
| 18 | 5.0 | 1.5 | PMVE-MA | 22.8 |
| 19 | 5.0 | 3.0 | PMVE-MA | 20.3 |
| 20 | 12.5 | 1.5 | PMVE-MA | 23.6 |
| 21 | 12.5 | 3.0 | PMVE-MA | 20.9 |

The same trend found for the blends prepared in the Brabender regarding the optimum nitrile/compatibilizer ratio can be observed for the compatibilized blends prepared in the extruder. For comparison, see Examples 1, 2, 3 and 4; and Examples 5 and 6 (Table 7).

TABLE 7

Chemical Resistance Improvement of Compatibilized HDPE/Barex® 210 Extruded Blends

| No. | Amount of Barex® 210 (wt%) | Amount of Compatibilizer (wt%) | Type of Compatibilizer | Chemical Resistance Improvement (%) |
|---|---|---|---|---|
| 1 | 1.5 | 0.375 | PMVE-MA | 5.7 |
| 2 | 2.5 | 0.375 | PMVE-MA | 25.1 |
| 3 | 2.5 | 0.75 | PMVE-MA | 19.6 |
| 4 | 2.5 | 1.5 | PMVE-MA | 27.3 |
| 5 | 5.0 | 1.5 | PMVE-MA | 29.6 |
| 6 | 10.0 | 1.5 | PMVE-MA | 44.7 |
| 7 | 10.0 | 1.5 | PMVE-MA | 43.3 |
| 8 | 1.5 | 0.75 | PMVE-MA | 24.9 |
| 9 | 2.5 | 0.375 | PMVE-MA | 30.8 |
| 10 | 2.5 | 0.75 | PMVE-MA | 46.3 |
| 11 | 3.5 | 0.75 | PMVE-MA | 19.6 |
| 12 | 5.0 | 0.75 | PMVE-MA | 35.3 |
| 13 | 10.0 | 0.75 | PMVE-MA | 31.4 |

Blow Molding Test - Binary and Compatibilized HDPE/B210 Blends Using a Bekum BM04 Machine

Test Procedures

Bottles were blown using a 60 mm diameter Bekum BM04 extrusion blow molder. Both binary and ternary blends of HDPE, Barex® 210 and/or compatibilizer were fed into the extrusion bottle blowing machine either as a pre-pelletized feed or a dry blend. Temperature at the feed of the extruder was set at 320°F to avoid premature fusion. The blow pressure was maintained constant at 80 psi. Several screws were used with a L/D=24:1 and compression ratios ranging from 1.8 to 3.0. Bottles were blown using a conventional process screw with a 2.5:1 compression ratio. Typically 100-300 bottles of a blend were blown for testing. Head and melt temperature, polymer melt pressure and bottle weight were monitored at all times.

The evaluation of some blow molding conditions is shown in Table 8 for binary blends containing 5 and 10% Barex® 210.

TABLE 8

| Extrusion Blow Molding Evaluation | |
|---|---|
| Blend Permeability Reduction As A Function of Processing and Composition Variable | |
| Temperature of Melt (Degree C) | Chemical Resistance % Improvement |
| 200 | 20.4 |
| 220 | 24.2 |
| Screw Design | |
| Screw A (3/1 Compression) | 22.2 |
| Screw C (1.82 Compression Ratio Plus Pins) | 22.4 |
| Weight<br>Control Setting<br>Extrusion Machine | |
| 11 | 25.8 |
| 16 | 18.9 |
| Concentration of Barex % | |
| 5 | 18.9 |
| 10 | 25.8 |

A comparison of permeability data for blow molded bottles prepared from pelletized blends versus dry pellet blends of HDPE and Barex® 210 resin are presented in Tables 9 and 10.

TABLE 9

Xylene Permeability Reduction of HDPE/Barex® 210 Binary Blends (Blow Molded Bottles from Pellets)*

| No. | Amount of Barex® 210 | Permeability Reduction (%) | Blend Pellet Type |
|---|---|---|---|
| 1 | 5.0 | 0.0 | dry blends |
| 2 | 10.0 | 4.0 | " |
| 3 | 15.0 | 10.0 | " |

* Specimen Tested = Bottle Wall
Solvent = Xylene
Testing Temperature = 40°C

TABLE 10

Permeability Reduction of Blow Molded Bottles Obtained From Dry Blends of HDPE and Barex® 210 Compatibilized with OCTD-co-MA*

| No. | Amount of Barex® 210 (wt%) | Amount of Compatibilizer (Actone 1) (wt%) | Permeability Reduction (%) |
|---|---|---|---|
| 1 | 13 | 1 | 26.2 |
| 2 | 15 | 3 | 28.6 |
| 3 | 19 | 3 | 40.8 |

* Specimen Tested = Bottle Wall
Solvent = Xylene
Testing Temperature 40°C

The reduction in oxygen transmission rate (OTR) of HDPE/Barex® 210 blends is compared to a similar fluoro-sealed level 4 container in Table 11.

TABLE 11

OXYGEN BARRIER PROPERTIES OF HDPE/BAREX® 210 RESIN BLENDS

| Sample Composition % By Weight High Nitrile Resin | OTR cc(STP)/day-atm | Improvement Over Control % |
|---|---|---|
| Control | | |
| 4 Barex® 210E resin (Color Stabilized) | 2.13 | 8.2 |
| 5 Barex® 210E pHW resin (Color Stabilized) | 1.83 | 22.0 |
| 5 Barex® 210E resin | 2.18 | 6.0 |
| 6 Barex® 210E resin | 1.81 | 22.0 |
| 5 Barex® 210I resin | 2.02 | 13.0 |
| 5 Barex® 218 resin | 1.92 | 18.0 |
| 10 Barex® 210 resin[a] | 1.52 | 39.4 |
| Fluorinated HDPE container - Level 4[b] | 2.13 | 15.1 |

a) Compatibilized with 1% Actone 1 and contains 0.01% Zn stearate.

b) Fluoro-sealed Level 4 inside and outside surface.

Note: The oxygen barrier property tests of the 12 oz. size containers were performed in duplicate with a coulometric whole package oxygen permeation analyzer at 73°F and wet conditions.

Measurement of Xylene and Xylene/Methanol Mixture Permeation Properties on Bottles of HDPE/Barex® Resin Blends

Full bottles were used in these tests. Approximately 200 ml of xylene, methanol or xylene/methanol mixture were added to the bottles. The bottles were heat sealed with aluminum foil and a screw cap tightened over the top. These test bottles were weighed to the nearest 0.005 gm, placed in a well ventilated oven at 140°F and the weight loss recorded every 24 hours for at least 15-30 days. At the end of the test, the sealed bottles were allowed to stand for 24 hours at room temperature and "paneling" observed to determine any evidence of seal leaks. Containers which developed leaks were discarded.

Typical permeations results on bottles obtained form a series of HDPE/Barex® resin blends using various commercial grades of Barex® 210 resin are shown in Table 12.

TABLE 12

| PERMEATION PROPERTIES OF HDPE (Paxon BA 50-100)/BAREX® RESIN BLENDS (Percent improvement over HDPE control sample) | | | |
|---|---|---|---|
| Sample Identification % (w) / High Nitrile/Resin | Xylene | Methanol | Xylene/Methanol Mixture |
| 4 Barex® 210E (Color Stabilized) resin | 7.6 | 72.7 | 0.0 |
| 5 Barex® 210E (Color Stabilized) resin | 13.7 | 77.2 | 12.3 |
| 5 Barex® 210E resin | 4.0 | 54.5 | 4.3 |
| 6 Barex® 210E resin | 12.1 | 36.3 | 12.9 |
| 5 Barex® 210I resin | 7.1 | 77.2 | 7.4 |
| 5 Barex® 218 resin | 7.6 | 77.2 | 8.0 |
| 7.5 Barex® 218 resin | 11.7 | 77.2 | 12.9 |

Measurement of Column Crush Strength of Whole Bottles

Blow molded bottles (one pint) were tested in a compression testing machine (TMS) using a crosshead speed of 0.30 inches/minute. The bottles were placed in a jig which allowed the neck to move freely without touching the crosshead. They were run in an inverted position and a stress-strain curve determined from which the following typical data presented in Table 13 were calculated.

TABLE 13

COLUMN CRUSH STRENGTH OF RIGID CONTAINERS MADE OF HDPE/BAREX® 210 RESIN BLENDS

| Barex® 210 resin % by weight | 0 | 5 | 10[a] | 15[a] |
|---|---|---|---|---|
| Bottle weight, gms | 27.7 | 29.9 | 31.5 | 33.0 |
| Side Wall Thickness, mils | 27.0 | 33.0 | 35.0 | 33.0 |
| Peak load, lb | 104.9 | 152.4 | 183.3 | 222.0 |
| Stiffness, lb/in. | 40,903 | 53,145 | 62,260 | 69,449 |
| Total Energy, in-lb. | 41.2 | 51.2 | 54.1 | 80.1 |
| Modulus of Elasticity, psi | 6,286 | 8,161 | 9,561 | 10,665 |

a) Compatibilized with 3% Actone 1.

Measurement of Environmental Stress Crack Resistance

Each test bottle was filled with sufficient 10% solution of Igepal to cover the base of the container. Seven of these bottles were mounted on a pressure manifold which maintained a constant pressure of 15 psi. These manifolds were maintained at 100°F for a period of 30 days. Testing was discontinued upon failure (i.e. cracking) and the time to failure recorded. At the end of the test each bottle was pressure tested to assure that there were no crack failures. Typical results obtained in these tests are shown in Table 14.

TABLE 14

| ENVIRONMENTAL STRESS CRACK RESISTANCE OF RESIN BLENDS | | |
|---|---|---|
| 140°F, 5 psi constant pressure, 10% Igepal, 25% bottle fill level, 15 day test period, 7 Samples | | |
| Composition | Number of Stress Crack Failures | Comment |
| Control (HDPE Paxon BA 50-100) | 3 | |
| 5% Barex 210E resin | 0 | Extrusion Molding grade |
| 6% Barex 210E resin | 0 | |
| 10% Barex 210E resin | 0 | 2% Actone & 0.01% Zn Stearate |
| 4% Barex 210E resin (Color Stabilized) | 0 | |
| 5% Barex 210E resin (Color Stabilized) | 0 | |
| 5% Barex 210I Resin | 0 | Injection Molding grade |
| 5% Barex 218 resin | 1 | High rubber |
| 7.5% Barex 218 resin | 0 | |
| Level 4 Fluorinatin (HDPE) | 3 | |

Example 10

Determination of Changes in Polymer Morphology in HDPE/Barex® 210 Blends

The influence of the dispersant/plasticizer (Zn stearate) in enhancing the adhesion between the HDPE phase and the Barex® 210 phase can be observed using electron microscopy. A comparison between the xylene barrier improvement of a blend consisting of HDPE, Barex® 210 resin, and a compatibilizer (ACTONE 1) and a system containing HDPE, Barex® 210 resin, compatibilizer (ACTONE 1) and dispersant (Zn stearate-0.1%) is shown in Table 15.

TABLE 15

| MORPHOLOGY OF HDPE/BAREX® 210 RESIN BLENDS | | |
|---|---|---|
| Sample Description, % by weight HDPE/Barex® 210 resin/ACTONE 1/Zn Stearate | Description of Morphology | Improvement in Xylene Permeation % |
| 84/15/1/0 | Elongated barrier regions | 13 |
| 82/15/3/0 | Elongated & laminar regions<br>Insufficient adhesion | 4 |
| 81.9/15/3/0.1 | Elongated & laminar regions<br>Good interphase adhesion | 40 |

One of the advantages of blends of high density polyethylene and nitrile polymers is their potential low cost in comparison with other competitive materials. Another important aspect of the invention is its versatility. Polyolefins are available in a considerable number of grades of different molecular weight, polydispersity, branching, comonomers, flow characteristics and obviously different densities and degrees of crystallinity. Any of the polyolefin grades can be used in conjunction with nitrile polymers. The selection should be based on the type of application and specific properties which have to be improved.

Equally significant is availability of nitrile polymers of different grades and different melt flow characteristics. Choices of rigid or softer grades allows the latter to be used in both sheet and bottle applications. A further advantage of this invention derives from properties of nitrile polymers which allow for different processing options including sheet extrusion, thermoforming, extrusion blow molding, blown film extrusion as well as tube extrusion.

Blends of nitrile polymers such as Barex® 210 extrusion grade, Barex® 210 injections molding grade and high impact grade Barex® 218 resin can be used to adjust the flow characteristics of the nitrile component to achieve desirable processing parameters. In turn, nitrile polymers such as poly(acrylonitrile-co-methyl acrylate) and/or poly(acrylonitrile-co-methyl acrylonitrile) which do not contain rubber components can be used alone or blended with Barex® 210 resin and/or Barex® 218 resin, as barrier components in blends with polyolefins when the main target is the improvement in chemical resistance properties. The same approach can be used when a combination of properties such as processability, mechanical, chemical, gas barrier are required for polyolefin/nitrile blends. An important aspect of this invention is the relatively low processing temperatures required to obtain these blends. This allows the preparation of blends with better properties, prevents the degradation of each component, and saves energy. It also should be noted that blends described herein are candidates in reprocessing/recycling applications.

While this invention is concerned with formation of visually homogeneous polymer blends for chemical/gas packaging applications. Key parameters controlling the formation of visual homogeneous polyolefin/nitrile blends and achieving improved mechanical properties and/or improved flow characteristics are the molecular weight and the flow properties of both components, the type and amount of compatibilizer (when required) and compatibilizer/dispersants synergistic effects. Based on these effects, the invention shows that concentration of both the barrier component and compatibilizer can be reduced thereby offering an economic advantage.

## Claims

**1.** A composition comprising a blend of:
(A) 0.5 to 15 weight percent of a high nitrile polymer produced by polymerizing
(i) an alpha, beta-olefinically unsaturated mononitrile of the formula:

```
CH2=C-CN
    |
    R
```

wherein R is hydrogen, a lower alkyl group having 1 to 4 carbon atoms or a halogen, with

(ii) a monomer copolymerizable with the alpha, beta-olefinically unsaturated mononitrile selected from the group consisting of esters of olefinically unsaturated carboxylic acids, vinyl esters, vinyl ethers, vinyl ketones, alpha-olefins, vinyl aromatic monomers and mixtures thereof, and

(B) 85 to 99.5 weight percent of a polyolefin.

**2.** A composition according to claim 1, wherein the polyolefin is a polyethylene, a polypropylene, a polybutene, a polypentene, a copolymer of at least two of ethylene, propylene, a butene or a pentene, or a blend thereof.

**3.** A composition according to claim 1, wherein the polyolefin is a high density polyethylene (HDPE).

**4.** A composition according to claim 1, wherein the high nitrile polymer is produced by polymerizing a major proportion of a monounsaturated nitrile and a minor proportion of a monovinyl monomer copolymerizable with the nitrile in the presence of a diene rubber.

**5.** A composition according to claim 1, wherein the high nitrile polymer is produced by the polymerization of 100 parts by weight based on the combined weights of (a) and (b) of:

(a) from 50 to 90 percent by weight of at least one alpha, beta-olefinically unsaturated mononitrile of formula:

```
CH2=C-CN
    |
    R
```

wherein R is hydrogen, a lower alkyl group having 1 to 4 carbon atoms or a halogen, with

(b) from 10 to 40 percent by weight of at least one monomer selected from the group consisting of:-

(i) an ester having the structure

```
CH2=C-COOR2
    |
    R1
```

wherein R1 is hydrogen, an alkyl group having 1 to 6 carbon atoms, or a halogen, and R2 is an alkyl group having from 1 to 30 carbon atoms,

(ii) alpha-olefins having the structure

```
CH2=C-R4
    |
    R3
```

wherein R3 and R4 are alkyl groups having from 1 to 7 carbon atoms,

(iii) a vinyl ether selected from the group consisting of methyl vinyl ether, ethyl vinyl ether, propyl vinyl ether and butyl vinyl ether,

(iv) vinyl acetate,

(v) styrene, and

(vi) indene,

in the presence of 0 to 40 parts by weight of

(c) a rubbery polymer of a conjugated diene monomer selected from the group consisting of butadiene and isoprene and optionally a comonomer selected from the group consisting of styrene, a nitrile monomer having the structure:

```
CH2=C-CN
    |
    R
```

wherein R has the foregoing designation, and an ester having the structure:

```
CH2=C-COOR2
    |
    R1
```

wherein R1 and R2 have the foregoing respective designations, said rubbery polymer containing from 50 percent to 100 percent by weight of polymerized conjugated diene and from 0 percent to 50 percent by weight of a comonomer.

**6.** A container comprising a polymer blend of:
(A) 0.5 to 20 weight percent of a high nitrile polymer produced by polymerizing
(i) an alpha, beta-olefinically unsaturated mononitrile of the formula:

```
CH2=C-CN
    |
    R
```

wherein R is hydrogen, a lower alkyl group having 1 to 4 carbon atoms or a halogen, with
(ii) a monomer copolymerizable with the alpha beta-olefinically unsaturated mononitrile selected from the group consisting of esters of olefinically unsaturated carboxylic acids, vinyl esters, vinyl ethers, vinyl ketones, alpha-olefins, vinyl aromatic monomers and mixtures thereof, and
(B) 80 to 99.5 weight percent of a polyolefin.

**7.** A container according to claim 6 wherein the polyolefin is a polyethylene, a polypropylene, a polybutene, a polypentene, a copolymer of at least two of ethylene, propylene, a butene or a pentene, or a blend thereof.

**8.** A container according to claim 7 wherein the polyolefin is a high density polyethylene (HDPE).

**9.** A container according to claim 6, wherein the high nitrile polymer is produced by polymerizing a major proportion of a monounsaturated nitrile and a minor proportion of a monovinyl monomer copolymerizable with the nitrile in the presence of a diene rubber.

**10.** A container according to claim 6, wherein the high nitrile polymer is produced by the polymerization of 100 parts by weight based on the combined weights of (a) and (b) of:
(a) from 50 to 90 percent by weight of at least one alpha, beta-olefinically unsaturated mononitrile of formula:

```
CH2=C-CN
    |
    R
```

wherein R is hydrogen, a lower alkyl group having 1 to 4 carbon atoms or a halogen, with
(b) from 10 to 40 percent by weight of at least one monomer selected from the group consisting of:
(i) an ester having the structure:

```
CH2=C-COOR2
    |
    R1
```

wherein R1 is hydrogen, an alkyl group having 1 to 6 carbon atoms, or a halogen, and R2 is an alkyl group having from 1 to 30 carbon atoms,
(ii) alpha-olefins having the structure:

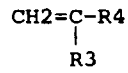

wherein R3 and R4 are alkyl groups having from 1 to 7 carbon atoms

(iii) a vinyl ether selected from the group consisting of methyl vinyl ether, ethyl vinyl ether, propyl vinyl ether and butyl vinyl ether,

(iv) vinyl acetate,

(v) styrene and

(vi) indene,

in the presence of 0 to 40 parts by weight of:

(c) a rubbery polymer of a conjugated diene monomer selected from the group consisting of butadiene and isoprene and optionally a comonomer selected from the group consisting of styrene, a nitrile monomer having the structure:

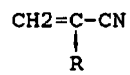

wherein R has the foregoing designation, and an ester having the structure:

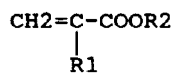

wherein R1 and R2 have the foregoing respective designations, said rubbery polymer containing from 50 percent to 100 percent by weight of polymerized conjugated diene and from O percent to 50 percent by weight of the comonomer.